# EUROPEAN PATENT APPLICATION

(11) **EP 1 048 327 A2**
(43) Date of publication of application: **02.11.2000**
(21) Application number: 00302604.4
(22) Date of filing: 29.03.2000
(51) Int. Cl.: A62D 3/00

(54) **Method and agent for reducing chlorinated aromatic compounds**

(30) Priority: 29.03.1999 JP 8596599
(71) Applicant: SHIN-ETSU CHEMICAL CO., LTD., Chiyoda-ku Tokyo (JP); Tagawa, Sadako, Tokyo (JP)
(72) Inventor: Saito, Kenji, c/o Gunma Complex, Annaka-shi, Gunma-ken (JP); Chinda, Michiru, c/o Gunma Complex, Annaka-shi, Gunma-ken (JP); Minemura, Masahiko, c/o Silicone-Elec. Mat. Res.Ct, Matsuida-machi, Usui-gun, Gunma-ken (JP); Yamamoto, Akira, c/o Silicone-Elec. Mat. Res. Ctr., Matsuida-machi, Usui-gun, Gunma-ken (JP); Toshin, Kazumi, Kurashiki-shi, Okayama-ken (JP)
(74) Representative: Stoner, Gerard Patrick

(57) **Abstract**

Chlorinated aromatic compounds such as dioxin, PCB and DDT can be effectively reduced by mixing the chlorinated aromatic compounds with an SiH group-bearing organosilicon compound and heating the mixture at 150-1,300°C.

## Description

This invention relates to a method for reducing chlorinated aromatic compounds such as dioxin, PCB and DDT and more particularly, to a method for reducing chlorinated aromatic compounds generated during incineration of waste and disposal of PCB. It also relates to a treating agent used in this method.

### BACKGROUND

Of organochlorine compounds, many chlorinated aromatic compounds such as dioxin, PCB (polychlorinated biphenyl compounds) and DDT are notorious for toxicity.

Stringent attention is now paid to environmental pollution with dioxin and analogues. Of these, 2,3,7,8-tetrachlorodibenzoparadioxin (TCDD) is known most toxic as demonstrated by an LD50 of 2 µg per kg of guinea pig. These highly toxic chlorinated aromatic compounds including TCDD, 2,3,4,7,8-PCDF and 3,4,5,3',4'-PCB have been confirmed to be carcinogenic and teratogenic.

As is well known, dioxin and analogues are generated during incineration of waste and plastics, are scarcely collected or removed by a dust collector, and escape in the air or are left in incineration ash. The amount of dioxin generated can be considerably reduced by raising the incineration temperature above 800°C. However, since high-temperature incinerators are expensive, it is difficult to construct high-temperature incinerators in Japan and other countries where a number of relatively small-size incinerator plants are used. Another problem associated with high-temperature incinerators is that a relatively low incineration temperature zone which allows for dioxin generation is necessarily passed during the rise and fall of the incineration temperature. It is inevitable that dioxin generates in that temperature zone.

Also, while the incineration process generally includes incinerating, heat recovery, gas cooling and dust collecting steps, the dust collecting step often uses an electrostatic dust precipitator which operates at about 300°C. Thus much dioxin generates in this step. Consequently, the fly ash deposit on the precipitator contains dioxin in very high concentrations.

It is also known that dioxin generates upon decomposition of PCB. One known method for the safe disposal of PCB is to decompose PCB together with an alkali metal in a sealed container under a pressure of about 400 atm. Regrettably the installation cost is high.

There is a strong demand to have a simple and effective method capable of reducing chlorinated aromatic compounds such as dioxin, PCB and DDT.

We have found that chlorinated aromatic compounds can be effectively disposed of simply by heat treating the chlorinated aromatic compounds along with an organosilicon compound having a hydrogen atom directly attached to a silicon atom (that is, SiH group).

For reducing dioxin generated during incineration of waste, several attempts have been made. One known attempt is to raise the operating temperature of incinerators as described above. Another attempt made on the dust collection step is to use an inorganic porous powder such as active carbon for collecting dust by adsorption, in addition to a mesh-type dust collector such as a bag filter. However, when the powder used for adsorption is burned, there is a possibility of dust explosion. If the used powder is buried in the ground, the once adsorbed dioxin will leach out again. Therefore, the powder adsorption does not give a fundamental solution.

With respect to reaction of organochlorine compounds with silicon compounds, it is a known synthetic reaction for chlorosilane monomer that chlorine is eliminated at temperatures of 400 to 600°C to produce hydrogen chloride and induce silylation of aromatic rings.

Since the silane monomer has a high volatility and a low flash point, a pressure vessel for preventing volatilization of the silane monomer is necessary in order to promote chlorine elimination from chlorinated aromatic compounds. This is acceptable when pure chlorinated aromatic compounds are processed, but not contemplated for the disposal of incineration ash containing a minor amount, typically several tens of micrograms per gram, of chlorinated aromatic compounds.

In contrast, the present invention enables effective and simple treatment of chlorinated aromatic compounds by using an organosilicon compound having a hydrogen atom directly attached to a silicon atom.

In one aspect, the invention provides a method for reducing a chlorinated aromatic compound, comprising the step of heat treating a chlorinated aromatic compound in admixture with an organosilicon compound having a hydrogen atom directly attached to a silicon atom.

In another aspect, the invention provides a method for reducing chlorinated aromatic compounds in a material to be incinerated, especially a material to be incinerated which generates or can generate chlorinated aromatic compounds upon incineration, comprising the step of incinerating the material in admixture with an organosilicon compound having a hydrogen atom directly attached to a silicon atom.

In a further aspect, the invention provides a chlorinated aromatic compound treating agent comprising primarily an organosilicon compound having a hydrogen atom directly attached to a silicon atom.

According to the invention, chlorinated aromatic compounds are reduced by heat treating them in admixture with an organosilicon compound having a hydrogen atom directly attached to a silicon atom (that is, SiH group).

The chlorinated aromatic compounds typically include toxic ones such as dioxin, PCB and DDT. According to the invention, the chlorinated aromatic compounds alone may be treated although a certain form of material containing chlorinated aromatic compounds is generally treated. Such materials include incineration ash and fly ash containing chlorinated aromatic compounds, waste or rubbish containing chlorinated aromatic compounds, and waste or rubbish capable of generating chlorinated aromatic compounds upon incineration (they are sometimes referred to as "material to be incinerated," hereinafter).

As the treating agent, the invention uses an organosilicon compound having at least one hydrogen atom directly attached to a silicon atom (that is, SiH group). It is preferably an organohydrogensiloxane of the following average compositional formula (1):

RₐH_{b}SiO_{(4-a-b)/2} (1)

wherein R is a substituted or unsubstituted monovalent hydrocarbon group, letters a and b are numbers satisfying 0 ≤ a < 2.0, 0 < b < 1.0, and 0 < a+b < 2.5. R preferably stands for substituted or unsubstituted monovalent hydrocarbon groups of 1 to 12 carbon atoms, for example, alkyl groups such as methyl, ethyl and octyl, alkenyl groups such as vinyl, aryl groups such as phenyl, aralkyl groups such as benzyl, and substituted ones of these groups in which some hydrogen atoms are replaced by hydroxyl groups or the like. Most preferably R is methyl.

The organohydrogensiloxane's molecular structure may be linear, branched or cyclic and either liquid or solid. Since the object is to treat chlorinated aromatic compounds or a composition containing chlorinated aromatic compounds or a material capable of forming chlorinated aromatic compounds, it is preferred for ease of treatment to use a liquid organohydrogensiloxane having a viscosity of up to 10,000 centistokes at 25°C and more preferably having 2 to 3,000 silicon atoms, and especially 10 to 100 silicon atoms per molecule. The number of SiH groups per molecule is one or more although at least 5 SiH groups, and especially 10 to 100 SiH groups are preferred for effective treatment.

The chlorinated aromatic compounds, compositions containing chlorinated aromatic compounds such as incineration ash and fly ash left after incineration of a waste, or materials capable of forming chlorinated aromatic compounds such as rubbish or waste before incineration (that is, "materials to be incinerated") are treated with the organosilicon compound having silicon atom-bonded hydrogen atoms in various ways. When the organosilicon compound used is liquid, it may be directly sprayed over the material to be incinerated or a dilution or emulsion of the organosilicon compound in an organic solvent is sprayed. When the organosilicon compound used is solid, it is comminuted into powder and mixed with the material to be incinerated, or diluted with an organic solvent, followed by spraying.

When the material to be incinerated is incinerated, it is preferred that the organosilicon compound having silicon atom-bonded hydrogen atoms is previously applied to the material by a suitable technique as mentioned above, and the material having the organosilicon compound applied thereto is incinerated. By incinerating the material along with the organosilicon compound, the content of chlorinated aromatic compounds in the incinerated material (ash) can be reduced. If desired, the incineration ash or fly ash resulting from incineration of the material along with the organosilicon compound is further heat treated along with a fresh organosilicon compound having silicon atom-bonded hydrogen atoms.

The amount of organosilicon compound used may be properly selected, preferably in excess of the amount of chlorinated aromatic compounds. For the treatment of chlorinated aromatic compounds or a composition containing the same, it is preferred from the economic standpoint that the amount of the organosilicon compound used is 50 to 1,000,000 times, more preferably 10,000 to 100,000 times the weight of the chlorinated aromatic compounds. For the incineration of a material liable to generate chlorinated aromatic compounds upon incineration, that is, a material to be incinerated (waste or rubbish before incineration), it is preferred that the amount of the organosilicon compound used is about 0.0005 to 100 parts, more preferably about 0.001 to 5 parts by weight per 100 parts by weight of the material to be incinerated.

The invention carries out heat treatment using the organosilicon compound while the heating temperature is usually at least 150°C. The heating temperature may fall in a range below 1,300°C in which chlorinated aromatic compounds are unlikely to decompose. From the economic standpoint, an appropriate heating temperature is usually below about 800°C, especially about 200 to 600°C, more preferably in the range bridging about 300°C in which chlorinated aromatic compounds are likely to generate, namely in the range of about 200 to 400°C. The treating time largely varies with heat treating conditions and is not critical. From the economic standpoint, however, the desirable treating time is about 1 minute to about 1 hour in continuous treatment and about 1/2 to 12 hours in batchwise treatment, both from the start of heating. When the material to be incinerated is incinerated along with the organosilicon compound, the incineration temperature may be selected in accordance with the type of the material to be incinerated. An appropriate incineration temperature is 250 to 800°C, and especially 300 to 600°C. Even in incineration at relatively low temperatures, the invention can reduce chlorinated aromatic compounds.

In the method of reducing chlorinated aromatic compounds according to the invention, a catalytic amount of a catalyst may be mixed in addition to the organosilicon compound. Such catalysts include copper, boric acid, zinc chloride, aluminum, Raney nickel, and Friedel-Crafts catalysts.

For carrying out the heat treatment, any suitable equipment including batchwise incinerators, continuous incinerators, fly ash treating equipment, electric furnaces, mixers, and colloidal mills may be used. The equipment and container may be of either open or closed type. More preferred is a continuous equipment involving the steps of applying the organosilicon compound to a combustible material, incinerating or heating the material, and cooling and collecting scattering matter.

### EXAMPLE

Examples of the invention are given below by way of illustration and not by way of limitation.

### 1) Experiment of heating chlorinated aromatic compounds

### Example 1-1

A stainless steel (SUS) container for thermal analysis was charged with 10 µl of a methylhydrogensiloxane of the following formula (2) having an average degree of polymerization of 40, to which 10 µl (500 µg/ml) of 2-chlorobiphenyl was added. With the container closed, the sample was heated at 500°C for one hour. The sample was allowed to cool down, extracted with 500 µl of an organic solvent, and analyzed by a gas chromatograph-mass spectrometer (GC-MS). Note that the concentration of 2-chlorobiphenyl in the extracted liquid is 10 ppm if there is no loss.

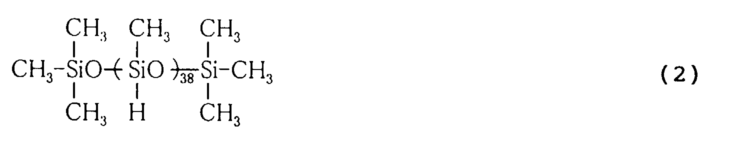

### Example 1-2

The procedure of Example 1-1 was repeated except that the sample was heated at 200°C for one hour. The treated sample was similarly analyzed by GC-MS.

### Example 1-3

The procedure of Example 1-2 was repeated except that o-dichlorobenzene was used instead of 2-chlorobiphenyl. The treated sample was similarly analyzed by GC-MS.

### Example 1-4

The procedure of Example 1-1 was repeated except that a methylhydrogensiloxane of the following formula (3) was used. The treated sample was similarly analyzed by GC-MS.

[(CH₃)₂HSiO_{1/2}]_{37.5}(SiO_{1/2})₅₀ (3)

### Comparative Example 1-1

A stainless steel (SUS) container for thermal analysis was charged with 10 µl of a dimethylsiloxane of the following formula (4) having an average degree of polymerization of 40, to which 10 µl (500 µg/ml) of 2-chlorobiphenyl was added. With the container closed, the sample was heated at 500°C for one hour. The sample was allowed to cool down, extracted with 500 µl of an organic solvent, and analyzed by GC-MS. Note that the concentration of 2-chlorobiphenyl in the extracted liquid is 10 ppm if there is no loss.

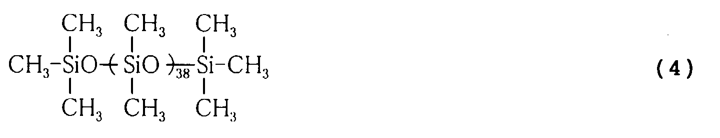

### Comparative Example 1-2

The procedure of Example 1-3 was repeated except that the dimethylsiloxane of formula (4) was used. The treated sample was similarly analyzed by GC-MS.

### Comparative Example 1-3

The procedure of Example 1-1 was repeated except that the heat treatment was to hold at 25°C for one hour. The treated sample was similarly analyzed by GC-MS.

For Examples and Comparative Examples, the contents of the chlorinated aromatic compound in the treated samples are shown in Table 1.

**Table 1**

| | Heating temperature | Chlorinated aromatic compound | Siloxane | Final content of chlorinated aromatic compound |
|---|---|---|---|---|
| E 1-1 | 500°C | 2-chlorobiphenyl | methylhydroge nsiloxane (2) | 0.7 ppm |
| E 1-2 | 200°C | 2-chlorobiphenyl | methylhydroge nsiloxane (2) | 0.5 ppm |
| E 1-3 | 200°C | o-dichlorobenzene | methylhydroge nsiloxane (2) | 0.4 ppm |
| E 1-4 | 500°C | 2-chlorobiphenyl | methylhydroge nsiloxane (3) | 4.8 ppm |
| CE 1-1 | 500°C | 2-chlorobiphenyl | dimethylsilox ane (4) | 8.9 ppm |
| CE 1-2 | 200°C | o-dichlorobenzene | dimethylsilox ane (4) | 9.0 ppm |
| CE 1-3 | 25°C | 2-chlorobiphenyl | methylhydroge nsiloxane (2) | 9.5 ppm |

It is thus evident that by adding an organosilicon compound having a silicon atom-bonded hydrogen atom to a chlorinated aromatic compound and heating the mixture, the content of chlorinated aromatic compound is significantly reduced.

### 2) Experiment of treating fly ash

### Example 2-1

A 30% emulsion of methylhydrogensiloxane of above formula (2), 30 g, was uniformly sprayed over 150 g of fly ash, which was burned at 600 to 700°C.

### Example 2-2

A 30% emulsion of methylhydrogensiloxane of above formula (2), 30 g, was uniformly sprayed over 150 g of fly ash, which was heated in a hot air circulating dryer at 250°C for 3 hours and then heated in a muffle furnace at 500°C for 3 hours.

### Comparative Example 2-1

A 30% emulsion of methylhydrogensiloxane of above formula (4), 30 g, was uniformly sprayed over 150 g of fly ash, which was burned at 600 to 700°C.

### Comparative Example 2-2

Fly ash, without silicone spraying, was heated in a hot air circulating dryer at 250°C for 3 hours and then heated in a muffle furnace at 500°C for 3 hours.

The contents of dioxin compounds (polychlorodibenzo-p-dioxin and polychlorodibenzofuran) in these fly ash samples were determined. TEQ (toxic equivalency quantity) was calculated therefrom. The results are shown in Table 2.

**Table 2**

| | Dioxin content (ng/g) | TEQ (ng-TEQ/g) |
|---|---|---|
| Fly ash (initial) | 360 360 | 1.4 |
| E 2-1 | 16 | 0.29 |
| E 2-2 | 54 | 0.72 |
| CE 2-1 | 151 | 1.0 |
| CE 2-2 | 336 | 1.2 |

### 3) Experiment of incinerating waste

### Example 3

A uniform mixture of 23 liters of methylhydrogensiloxane and 23 liters of kerosine was sprayed over 20 m³ of waste. The waste was heated and incinerated in an incinerator for 12 hours until the temperature within the incinerator reached 1,000°C.

### Comparative Example 3-1

Untreated waste, 20 m³, was heated and incinerated in an incinerator for 12 hours until the temperature within the incinerator reached 1,000°C.

### Comparative Example 3-2

Kerosine, 23 liters, was sprayed over 20 m³ of waste. The waste was heated and incinerated in an incinerator for 12 hours until the temperature within the incinerator reached 1,000°C.

The ash left after incineration was analyzed for dioxin content according to the measurement method "Manual for standard measurement and analysis of dioxin compounds in the disposal of wastes" attached to the Sanitation/Environment Notice No. 38 delivered on February 26, 1997 by Japan Ministry of Health and Welfare, Environmental Health Bureau, Water Supply and Environmental Sanitation Department, Waste Management Division. The results are shown in Table 3.

**Table 3**

| | TRO (ng-TAO/g) |
|---|---|
| Example 3 | 0.7 |
| Comparative Example 3-1 | 3.5 |
| Comparative Example 3-2 | 4.5 |

The invention is successful in accomplishing effective and simple reduction of chlorinated aromatic compounds. The invention is useful in reducing chlorinated aromatic compounds which are generated during waste incineration and PCB disposal, and especially highly toxic dioxin compounds imposing a serious problem to the environment.

Japanese Patent Application No. 11-085965 is incorporated herein by reference.

Although some preferred embodiments have been described, many modifications and variations may be made thereto in light of the above teachings. It is therefore to be understood that the invention may be practiced otherwise than as specifically described in the examples.

## Claims

1. A method for reducing a chlorinated aromatic compound, comprising the step of heat treating a chlorinated aromatic compound in admixture with an organosilicon compound having a hydrogen atom directly attached to a silicon atom.

2. The method of claim 1 wherein a composition containing chlorinated aromatic compounds is heat treated together with the organosilicon compound having a hydrogen atom directly attached to a silicon atom.

3. The method of claim 2 wherein the composition is incineration ash or fly ash.

4. A method claim 1, 2 or 3 wherein the heat treatment is effected at a temperature of 150 to 1,300°C.

5. A method according to any one of the preceding claims wherein the organosilicon compound is an organohydrogensiloxane of the following average compositional formula (1):
RₐH_{b}SiO_{(4-a-b)/2} (1)
wherein R is a substituted or unsubstituted monovalent hydrocarbon group, letters a and b are numbers satisfying 0 ≤ a < 2.0, 0 < b < 1.0, and 0 < a+b < 2.5.

6. An incineration method e.g. for waste disposal, in which material is incinerated in admixture with an organosilicon compound having a hydrogen atom directly attached to a silicon atom.

7. The method of claim 6 comprising combining the organosilicon compound with the material before the incineration.

8. The method of claim 6 or 7 wherein the incineration step is at a temperature of 300 to 600°C.

9. A method of claim 6, 7 or 8 wherein the organosilicon compound is an organohydrogensiloxane of the following average compositional formula (1):
RₐH_{b}SiO_{(4-a-b)/2} (1)
wherein R is a substituted or unsubstituted monovalent hydrocarbon group, letters a and b are numbers satisfying 0 ≤ a < 2.0, 0 < b < 1.0, and 0 < a+b < 2.5.

10. An agent for treating chlorinated aromatic compounds, comprising primarily an organosilicon compound having a hydrogen atom directly attached to a silicon atom.

11. The treating agent of claim 10 wherein the organosilicon compound is an organohydrogensiloxane of the following average compositional formula (1):
RₐH_{b}SiO_{(4-a-b)/2} (1)
wherein R is a substituted or unsubstituted monovalent hydrocarbon group, letters a and b are numbers satisfying 0 ≤ a < 2.0, 0 < b < 1.0, and 0 < a+b < 2.5.
